# EUROPEAN PATENT APPLICATION

(11) **EP 2 572 873 A1**
(43) Date of publication of application: **27.03.2013**
(21) Application number: 12185188.5
(22) Date of filing: 20.09.2012
(51) Int. Cl.: B32B 1/00, B32B 1/06, B32B 1/08, B32B 5/00, B32B 5/18, B32B 5/22, B32B 5/28, B32B 7/00, B32B 7/04, B32B 25/00, B32B 27/00, B32B 27/04, B32B 27/12, B32B 27/06, B32B 5/24, B29D 30/02

(54) **Annular reinforcement structure**

(30) Priority: 20.09.2011 US 201113237045
(71) Applicant: Milliken & Company, Spartanburg, SC 29303 (US)
(72) Inventor: Wilson, Brian D., Greer, SC 29650 (US); Dotson, Michael Edward, Greenville, SC 29601 (US); Petri, Patrick A., Greer, SC 29650 (US); Vogt, Kirkland W., Simpsonville, SC 29681 (US)
(74) Representative: HOFFMANN EITLE

(57) **Abstract**

An annular reinforcement structure is provided having an inner reinforcement band, an outer reinforcement band positioned around and concentric with the inner reinforcement band, and a cast-in-place polymer foam spacer, which maintains the spatial orientation of the inner and outer reinforcement bands. The annular reinforcement structure may be embedded in an elastomeric matrix material to provide stability, such as for belt for power transmission.

## Description

This invention relates generally to composite structures, and particularly to an annular reinforcement structure having inner and outer reinforcement bands in concentric relationship, separated by a cast-in-place polymer foam spacer.

The claimed invention was made under a joint research agreement between Milliken & Company and Michelin Americas Research Company, a division of Michelin North America, Inc. The joint research agreement was in effect before the date the claimed invention was made, and the claimed invention was made as a result of activities undertaken within the scope of the joint research agreement.

### Background of the Invention

Various industrial products, such as belts for power transmission, hoses and tires, incorporate a reinforcement material in an elastomeric matrix, to achieve both strength and flexibility. For example, the reinforcing materials may be textile fabrics, metal sheets, fibers or cords made up of organic polymers, inorganic polymers, metals and combinations thereof. The reinforcement material may be a multi-ply structure.

Manufacture of the composite product typically requires that the spatial relationship of the reinforcement material and the elastomeric matrix be consistent throughout. In some circumstances, it may be advantageous to provide multiple layers of reinforcement material, wherein the layers are spaced apart, with the space between the reinforcement layers filled with a suitable matrix material, such as an elastomer. The present invention is directed to a novel reinforcement structure useful in the manufacture of such a product.

### Summary of the Invention

The present invention provides an annular reinforcement structure having an inner reinforcement band, an outer reinforcement band positioned around the inner reinforcement band, whereby the two bands are spaced apart and concentric. The inner and outer reinforcement bands are separated by a cast-in-place polymer foam spacer. The polymer foam may be a reticulated foam, made for example by combustion or chemical degradation of the polymer foam. The annular reinforcement structure may be incorporated into a matrix material, such as an elastomer, and the relative spacing of the inner and outer reinforcement bands remains uniform during the manufacturing process.

In one embodiment of the invention, the polymer foam spacer is an open-cell foam. The annular reinforcement structure can be incorporated into a matrix material under conditions whereby the matrix material will flow into the voids in the polymer foam spacer, resulting in a composite product having a matrix material embedded in the inner and outer reinforcement bands.

The annular reinforcement structure may be made by first placing the inner and outer reinforcement bands in a suitable mold, whereby the two bands are held in spaced apart, concentric relationship. Next, a polymer foam is cast in the space between the inner and outer reinforcement bands. The polymer foam is cured and/or solidifies to create the spacer.

In one embodiment of the method of manufacturing the annular reinforcement structure, the inner and outer reinforcement bands are placed in a mold having a space between (i) the outside of the outer reinforcement band and the mold; (ii) a space between the inside of the inner reinforcement band and the mold; or (iii) both. Suitable spacing elements, such as ribs, steps or locating pins, may be placed between the side of the mold and the reinforcement bands, to maintain the orientation of the bands in the mold. Accordingly, the polymer foam may be cast in the space between the mold and the reinforcement bands, as well as in the space between the reinforcement bands.

It is also within the scope of the invention to employ reinforcement bands that are porous, such that the cast-in-place polymer foam penetrates the interstices in the reinforcement bands. In one embodiment of the invention, the polymer foam may be in the space between the inner and outer reinforcement band, in the interstices in the reinforcement bands, and on the outside and inside of the outer and inner reinforcement bands, respectively.

### Brief Description of the Drawings

Figure 1 is a top perspective view of the annular reinforcement structure.
Figure 2 is a cut-away perspective view of the annular reinforcement structure.
Figure 3 is a top view of the annular reinforcement structure in a mold.
Figure 4 is a cut-away perspective view of the annular reinforcement structure in a mold.
Figure 5 is a top view of the annular reinforcement structure in a mold having spacing elements between the reinforcement bands and the sides of the mold.
Figure 6 is a cut-away perspective view of the annular reinforcement structure in a mold having spacing elements between the reinforcement bands and the sides of the mold.
Figure 7 is a cut-away perspective view of the annular reinforcement structure removed from the mold.
Figure 8 is a top perspective view of the annular reinforcement structure (shown by dashed lines) embedded in a matrix material.
Figure 9 is a cut-away perspective view of the annular reinforcement structure embedded in a matrix material.

### Detailed Description of the Invention

Without limiting the scope of the invention, the preferred embodiments and features are hereinafter set forth. All of the United States patents, published applications and unpublished pending applications, which are cited in the specification, are hereby incorporated by reference. Unless otherwise indicated, conditions are 25 °C, 1 atmosphere of pressure and 50% relative humidity, concentrations are by weight, and molecular weight is based on weight average molecular weight. The term "polymer" or "polymeric foam" as used in the present application denotes a material having a weight average molecular weight (Mw) of at least 5,000. Such polymeric materials can be amorphous, semi-crystalline, crystalline or elastomeric polymeric materials.

### Inner and Outer Reinforcement Bands

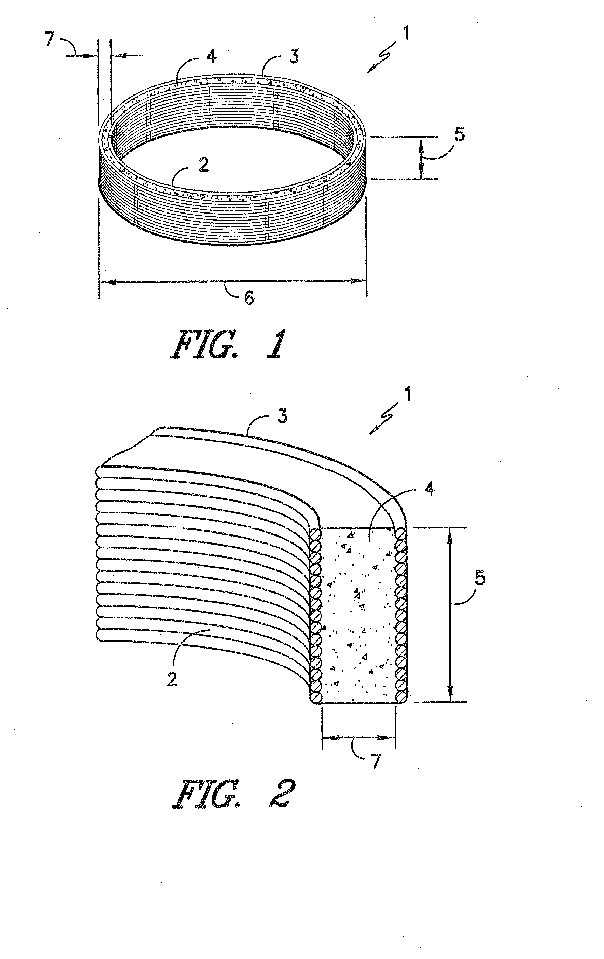

Referring to Figures 1 and 2, annular reinforcement structure 1 has inner reinforcement band 2, outer reinforcement band 3, and a cast-in-place polymer foam spacer 4. The reinforcement structure may be made with a range of dimensions. By way of example, the width 5 of the annular reinforcement structure may range from 0.5 inches to 5.5 feet, and the outside diameter 6 may range from 3 inches to 13 feet. By way of example, the distance between the inner reinforcement band 2 and the outer reinforcement band 3, that is, the thickness 7 of spacer 4, may range from 2 mm to 25 mm.

In various embodiments of the invention it is desirable to allow for relative movement of the inner and outer reinforcement bands within annular reinforcement structure 1, such as may be created by flexing or shear force. In such circumstances, spacer 4 may be provided with a minimum thickness 7 of 5 mm. Applications for the annular reinforcement structure of the present invention, including suitable structures, alignment and spacing of the reinforcement bands, may be found in US 6,769,465 B2 and US 7,650,919 B2.

Each of the reinforcement bands is a circular strip, characterized as being flexible in the radial direction and relatively inextensible in circumference. In one embodiment of the invention, the reinforcement bands are sufficiently flexible to be subjected to a bend radius that is one-tenth or less of the radius of the band when the band is oriented in the shape of a circle, without experiencing a permanent set in the band. The inner and outer reinforcement bands may be the same or different, both in terms of materials of construction and design.

By way of example, the reinforcement band may be a woven or non-woven textile structure, arrangement of monofilament and/or multifilament cords, bi-component yarns, spun yarns, braided cords, single or multilayer sheets of polymers or metals, or a combination of the foregoing materials. By way of example, the reinforcement bands may be constructed of fiberglass, rayon, nylon, aramid, polyester, carbon or metal, such as steel. The materials may be treated to improve performance, allow for easier manufacturing and/or improve bond strength between materials. Examples include brass-plated steel, elastomer coated cords and the use of adhesion promoters, such as resorcinol-formaldehyde latex. Further examples of suitable reinforcement bands may be found in belts for power transmission, hoses, tires, rollers, strapping and gaskets.

By way of further example, materials having a Young's modulus (lb/in²), of 5,000,000 or greater, or even 10,000,000 or greater, are useful herein. Alternatively, the stiffness of the reinforcement band and the matrix material filling the interstices in the polymer foam spacer may be characterized by a relative Young's modulus of 1,000:1 or even 10,000:1, respectively.

In one example, the reinforcement band may be a monofilament or multi-filament cord wound into a helix and making at least three revolutions. The multiple windings of the cord may be held together by a yam intertwined between adjacent cords, for example by weaving or knitting, with the yam arranged perpendicular to the cords. The intertwined yam may include fibers that can be melted to fuse the structure together, thereby providing stability to the band, especially in the axial direction. Examples of useful reinforcement band structures may be found in pending United States Patent Application Serial No. 12/661,196, filed March 12, 2010, which is hereby incorporated by reference.

Also within the scope of the invention is the use of multi-ply reinforcement bands. For example, layers of reinforcement material may overlay one another, perhaps joined by a suitable binder, adhesive or stitch bond. The plies may be oriented parallel to each other or at an angle, for example, by winding one ply around the other in a spiral. The multi-ply structures are considered as a single reinforcement band herein.

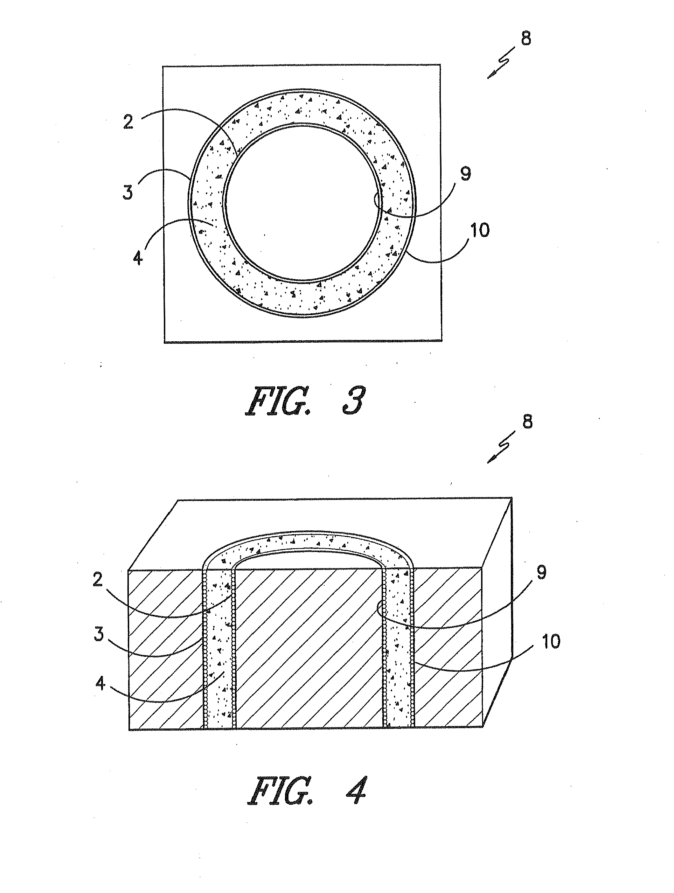

The polymer foam spacer is cast-in-place, that is, the inner and outer band are maintained in a spaced-apart, concentric orientation, and the polymer foam is formed in situ. Referring to Figures 3 and 4, ring mold 8 is shown with side walls 9 and 10, which correspond to the circumference of inner reinforcement band 2 and outer reinforcement band 3, respectively. The mold 8 may be made of any suitable material and provided with finishes or coatings to promote release of the annular reinforcement structure from the mold. Any of a variety of techniques may be employed to maintain the alignment of the reinforcement bands in the mold. For example, the reinforcement bands may be held in place by friction, vertical ribs, steps, jigs, locating pins and combinations thereof. In one embodiment, the reinforcement bands are ferrous or contain ferrous components, and the reinforcements are held in place by magnets or electromagnets.

### Polymer Foam Spacer

The polymer foam spacer may be formed in situ by introducing a liquid, reactant mixture capable of polymerizing, into the space between the inner and outer reinforcement bands. By way of example, the reactants may be a polyol and a polyisocyanate, which react to form a polyurethane foam, or the reactant mixture may contain a prepolymer or oligimer, which is cured in place. Alternatively, a polymer may be introduced into the space between the inner and outer reinforcement bands in a liquid state, for example, the polymer may be dissolved or dispersed in a suitable solvent, or the polymer may be a melted thermoplastic resin. In addition to polyurethane foam, including polyester-polyurethanes and polyether-polyurethanes, examples of polymer foams include polystyrene, polyolefin, in particular polyethylene and polypropylene, polyvinyl chloride, latex rubber, viscoelastic and melamine resin foams.

The cell structure of the foam can be controlled by suitable blowing agents, chemical and/or physical. Other additives, such as initiators, catalysts, cross-linking agents, and plasticizers, can be added to promote the reaction and modify the chemical and mechanical properties of the foam.

The foam may be an open-cell or closed-cell foam. Generally, open-cell foam is believed to provide a greater range of applications, particularly when the annular reinforcement structure is embedded in a matrix material and the matrix material fills voids in the polymer foam spacer, as discussed in more detail herein. By way of example, the polymer foams may have a fraction of voids to net volume of foam of 75% or greater, 85% or greater or even 95% or greater. The void fraction may be increased by reticulating the polymer foam spacer, for example, by combustion or chemical degradation. It may be advantageous to remove any "skin" formed on the outer surface of the polymer foam spacer, prior to reticulating the foam. Reticulated polyurethane foam having a fraction of voids to net volume of 90% or greater has been found to be particularly useful.

Polymer foam spacers having a wide range of physical properties, such as resilience, cell structure and porosity can be employed, depending upon the intended application of the annular reinforcement structure. For most applications, it is desirable that the polymer foam spacer has sufficient resilience to be handled without damage, yet be capable of maintaining the relative spacing and alignment of the inner and outer reinforcement bands during subsequent manufacturing steps. In one embodiment of the invention, the polymer foam spacer is elastomeric, that is, the spacer can elastically recover from 30% compression or greater. Polymer foam spacers that can elastically recover from 50% compression, or even from 80% compression or greater, may be advantageous in certain applications.

In one embodiment of the invention, one or both of the reinforcement bands are porous, that is, permeable to fluids, in particular, permeable to a liquid, reactant mixture capable of polymerizing, a solution or dispersion of a polymer, or a melted, thermoplastic polymer. Accordingly, the polymer foam forming the spacer may permeate pores or openings in the reinforcement bands, when the polymer foam is formed in situ.

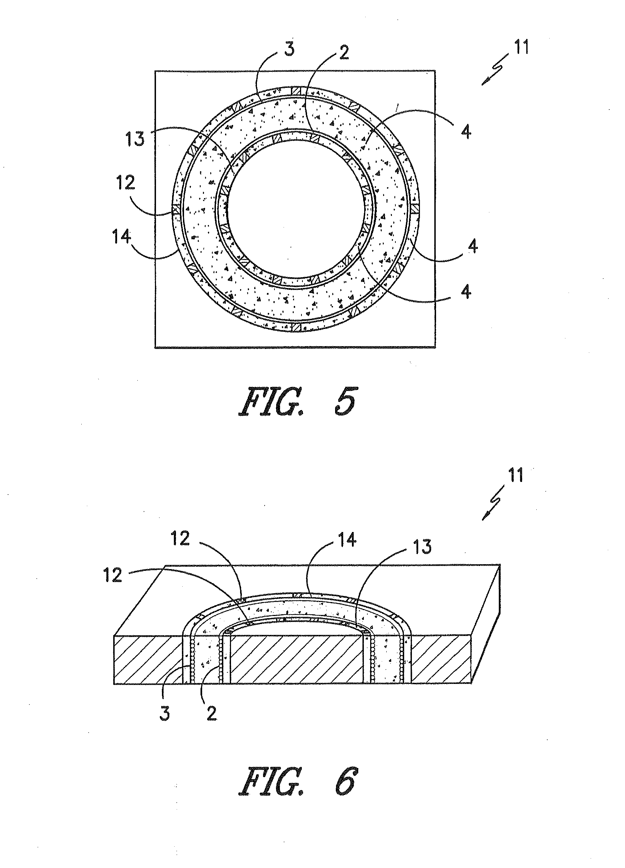

Referring to Figures 5, 6 and 7, in one embodiment of the invention, mold 11 is provided with spacing elements 12 between the inner side walls 13 and the outer side walls 14 of the mold and the inner and outer reinforcement bands 2 and 3, respectively. Accordingly, it is possible for the polymer foam 4 to be cast-in-place between the inner and outer reinforcement bands, as well as between the inner reinforcement band 2 and side wall 13 of mold 11 and between the outer reinforcement band 3 and side wall 14 of mold 11. The spacing elements maintain the orientation of the reinforcement bands relative to the mold, that is, a space is created between the mold and the reinforcement bands. The spacing elements may be vertical ribs, steps, jigs or pins engaging the mold or the reinforcement bands, or removable inserts that are held in place by friction and either removed after the polymer foam is cast or left in the annular reinforcement structure. The reinforcement bands may be held in alignment by magnets or electromagnets, when ferrous components are employed. By way of example, the space created by the spacing element between the reinforcement band and the side wall of the mold may range from 0.5 mm to 10 cm.

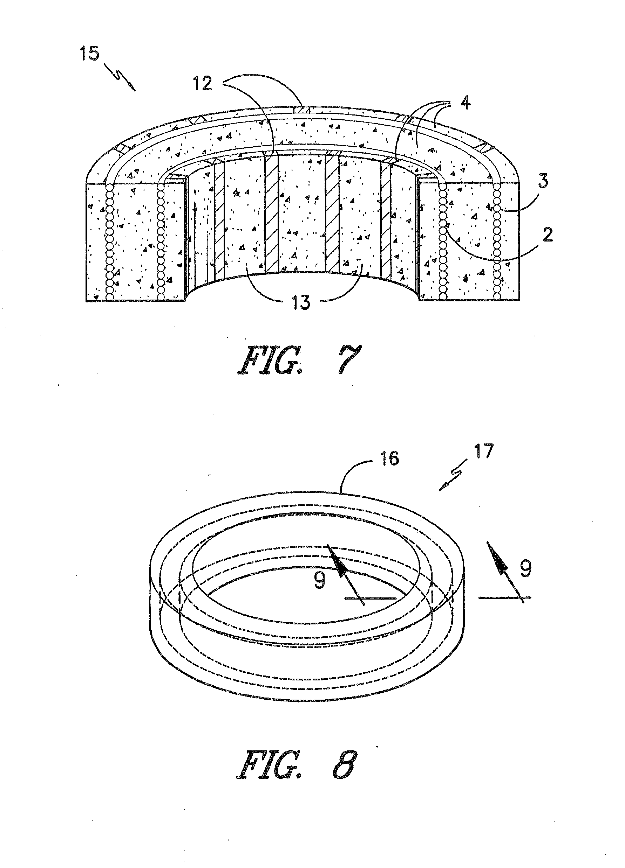

It is also within the scope of the invention for porous reinforcement bands to be used in conjunction with the mold 11, with spacing elements. The annular reinforcement structure 15 is shown in Figure 7, removed from the mold. Reinforcement bands 2 and 3 are embedded in the polymer foam spacer 4.

### Reinforced Matrix Material

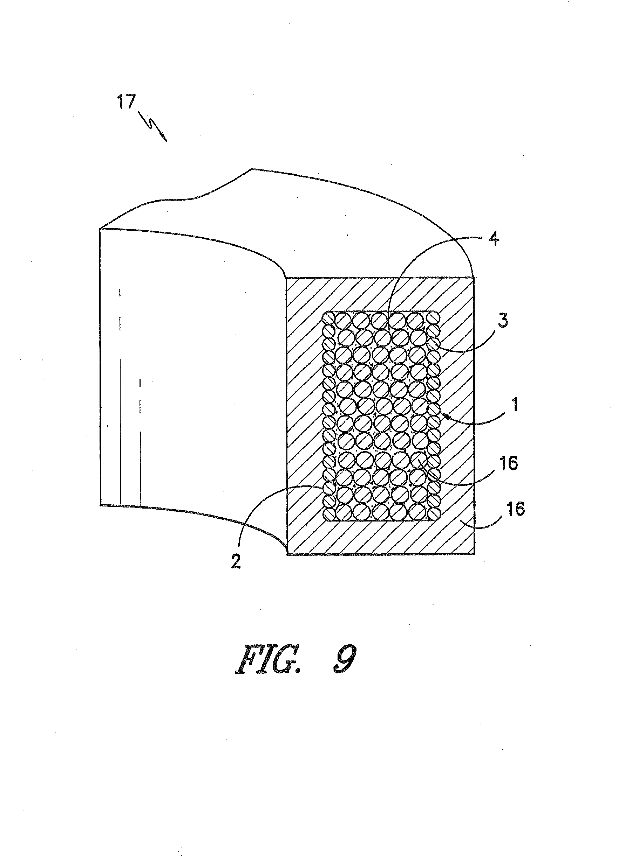

Referring to Figures 8 and 9, annular reinforcement 1 is shown embedded in a matrix material 16, to create reinforced ring 17. Depending on the selection of the matrix material, whether the polymer foam spacer is an open-cell or closed-cell foam, and the processing conditions, the matrix material may or may not permeate the polymer foam spacer. In the embodiment of the invention shown in Figure 9, the matrix material has permeated polymer foam spacer 4 and the voids in the foam are filled with matrix material 16.

The matrix material may be selected from a wide range of organic and inorganic materials, especially those that may be cast with the annular reinforcement structure embedded therein. By way of example, the matrix material may be a natural or synthetic polymer, including thermoplastic and thermosetting materials. Of particular interest are elastomeric matrix materials, such as natural or synthetic rubber, polyurethane, segmented copolyester, polyamide co-polymer and thermoplastic elastomers. In one embodiment of the invention, the polymer foam spacer 4 is a reticulated, polyurethane foam and the matrix material 16 is a solid polyurethane material, which permeates the voids in the polyurethane foam. In another example, the matrix material is a ceramic, concrete or organometalic compound.

Also within the scope of the present invention are processes in which the polymer spacer foam is a relatively low melting temperature thermoplastic and is partially or completely melted during the process of embedding the annular reinforcement structure in a matrix material. For example, a thermoplastic polymer foam spacer could be melted by the introduction of a matrix material, either because the matrix material is heated or involves an exothermic reaction. Alternatively, the polymer foam spacer could be melted or dissolved, prior to introduction of the matrix material, after the spacer has served its function of maintaining the relative orientation of the inner and outer reinforcement bands.

Applications incorporating the annular reinforcement structure of the present invention embedded in a suitable matrix material include: belts for power transmission, hoses, tires for virtually any size vehicle or wheeled apparatus, rollers, strapping, gaskets and concrete pipe.

### Three or More Reinforcement Bands

For some applications, particularly larger diameter annular reinforcement structures, it may be advantageous to manufacture an annular reinforcement structure having three or more concentric reinforcement bands, with a cast-in-place polymer foam spacer between each pair of adjacent reinforcement bands. For example, three reinforcement bands can be maintained in spaced-apart, concentric relation by a cast-in-place polymer foam spacer between the inner and middle reinforcement band and between the middle and outer reinforcement band. Such an annular reinforcement structure can be embedded in a matrix material, as described herein with regard to annular reinforcement structures having two reinforcement bands and a single cast-in-place foam spacer.

The invention may be further understood by reference to the following claims.

## Claims

1. An annular reinforcement structure, comprising:
(a) an inner reinforcement band;
(b) an outer reinforcement band positioned around the inner reinforcement band, whereby the inner and outer reinforcement bands are spaced apart and concentric; and
(c) a cast-in-place, polymer foam spacer between the inner and outer reinforcement bands.

2. The reinforcement structure of Claim 1, wherein the outer reinforcement band is porous and the polymer foam spacer permeates pores in the outer reinforcement band, and
wherein, preferably, the outer reinforcement band has an inside and an outside face and the polymer foam spacer band extends past the outside face of the outside band.

3. The reinforcement structure of Claim 1, wherein the inner reinforcement band is porous and the polymer foam spacer permeates pores in the inner reinforcement band, and
wherein, preferably, the inner reinforcement band has an inside and an outside face and the polymer foam spacer band extends past the inside face of the inside band.

4. The reinforcement structure of Claim 1, wherein the polymer foam spacer is selected from the group consisting of a polyurethane foam, and a reticulated foam.

5. The reinforcement structure of Claim 1, wherein the polymer foam spacer is an open-cell foam and has a fraction of voids to net volume of 85 % or greater.

6. The reinforcement structure of Claim 1, wherein the inner and outer reinforcement bands are each comprised of a cord selected from the group consisting of monofilament or multi-filament yarns, and the cord is wound into a helix making at least three revolutions.

7. The reinforcement structure of Claim 1, further comprising a second polymer filling voids in the polymer spacer foam.

8. The reinforcement structure of Claim 1, wherein the structure is embedded in a matrix material.

9. A method of making an annular reinforcement structure, comprising the steps of:
(a) providing inner and outer reinforcement bands in a mold, whereby the inner and outer reinforcement bands are maintained in concentric spaced relationship;
(b) casting a polymer foam spacer in the mold, in the space between the inner and outer reinforcement bands.

10. The method of Claim 9, further comprising the steps of reticulating the spacer to create a polymer foam having a fraction of voids to net volume of 75 % or greater.

11. The method of Claim 9, wherein the polymer foam spacer is an open-celled polyurethane foam.

12. The method of Claim 9, wherein the inner and outer reinforcement bands are porous and the polymer foam spacer permeates pores in the inner and outer reinforcement bands.

13. The method of Claim 9, wherein the mold has an outer wall positioned outside of the outer reinforcement band and the mold has an inner wall positioned inside of the inner reinforcement band and the inner and outer reinforcement bands are maintained in spaced relationship from the inner and outer walls of the mold, respectively, by spacers, and
wherein, preferably, the polymer foam spacer fills the volume between the outer wall of the mold and the outer reinforcement band and the inner wall of the mold and the inner reinforcement band.

14. The method of Claim 9, further comprising placing the annular reinforcement structure in a second mold and casting a matrix in the void area of the polymer foam spacer, and
wherein, preferably, the matrix material is selected from the group consisting of a solid, polyurethane elastomer, and a polymer formed by an in situ reaction in the voids of the polymer foam spacer.

15. The method of Claim 9, wherein the inner and outer reinforcement bands are each comprised of a cord selected from the group consisting of monofilament or multi-filament yarns, and the cord is wound into a helix making at least three revolutions.
